# EUROPÄISCHE PATENTSCHRIFT

(11) **EP 2 427 064 B1**
(45) Veröffentlichungstag und Bekanntmachung des Hinweises auf die Patenterteilung: **29.05.2013**
(21) Anmeldenummer: 10718080.4
(22) Anmeldetag: 28.04.2010
(51) Int. Cl.: C12G 3/02, A23L 1/185, A23L 2/40, C12C 7/04, C12C 7/047

(54) **MAISCHVERFAHREN ZUR HERSTELLUNG VON KWASS-WÜRZE**
MASHING METHOD FOR THE PRODUCTION OF KVASS WORT
PROCÉDÉ DE TREMPAGE POUR LA FABRICATION DE MOÛT DE KVAS

(30) Priorität: 08.05.2009 DE 102009020386
(43) Veröffentlichungstag der Anmeldung: 14.03.2012
(73) Patentinhaber: KRONES Aktiengesellschaft, 93073 Neutraubling (DE)
(72) Erfinder: MÜLLER-AUFFERMANN, Konrad, 85354 Freising (DE)
(74) Vertreter: Grünecker, Kinkeldey, Stockmair & Schwanhäusser
(86) Internationale Anmeldenummer: PCT/EP2010/002610
(87) Internationale Veröffentlichungsnummer: WO 2010/127798

(56) Entgegenhaltungen:
- DE-A1- 1 517 864
- SU-A1- 194 724
- SU-A1- 605 601
- SU-A1- 618 093
- US-A- 1 164 287
- RUDOLF W W: "Brotkwass - ein russisches Nationalgetränk" LEBENSMITTELINDUSTRIE, GIT VERLAG, DARMSTADT, DE, Bd. 16, Nr. 4, 1. Januar 1969 (1969-01-01), Seiten 133-135, XP009042000 ISSN: 0024-0028
- ANONYMOUS: "Maischen"[Online] Seiten 1-7, XP002587974 Brauherr.de Gefunden im Internet: URL:http://www.brauherr.de/sogehts/brauanl eitung/detailwissen/maischen/> [gefunden am 2010-06-18]

## Beschreibung

Die Erfindung betrifft ein Maischverfahren zur Herstellung von Kwass-Würze sowie ein Verfahren zum Herstellen von Kwass mit einem solchen Maischverfahren.

Aus der SU 618 093 ist bereits ein Maischverfahren bekannt, wobei das Verfahren durch die Zugabe von feuchter, gemahlener Gerste zur Maische beschleunigt und vereinfacht wird.

Aus der DE 1 517 864 A1 ist es bereits bekannt, Maische zur Herstellung von Kwasswürze stufenweise zu erhitzen.

Kwass ist ein uraltes Getränk, welches traditionell aus Brot, Getreiden, Malzen und Zucker hergestellt wird, und dem häufig weitere pflanzliche Stoffe zugegeben werden. Die Fermentation erfolgt meist mit einer Mischkultur aus Hefen und Milchsäurebakterien, so dass das kohlensäurehaltige Erfrischungsgetränk eine angenehme Säure hat, aber nur wenig Alkohol enthält. Bereits seit Jahrhunderten wird dem Kwass eine gesundheitsfördernde Wirkung zugeschrieben, und es zählt in Russland, der Ukraine und weiteren Ländern Osteuropas zu den Nationalgetränken. In den vergangenen Jahren hat dieses althergebrachte Produkt, vor allem in Russland und der Ukraine einen großen Aufschwung erfahren.

Hergestellt wird Kwass heute oftmals mit einer über 50 Jahre alten Anlagentechnik und nach einer ebenso alten Technologie. Bei dem klassischen Produktionsprozess kommt es teilweise zu erheblichen Problemen infolge des hohen Roggenanteils, da Roggen beispielsweise Substanzen wie Pentosane enthält, die bei unzureichendem Abbau oder starkem Sauerstoffeintrag stark viskositätserhöhend wirken können und dadurch die Filtration/Separation negativ beeinflussen. Das Kwass-Roggenmalz enthält zudem Kornpartien, die eine Lösung erschweren und die weitere Prozessfähigkeit behindern können.

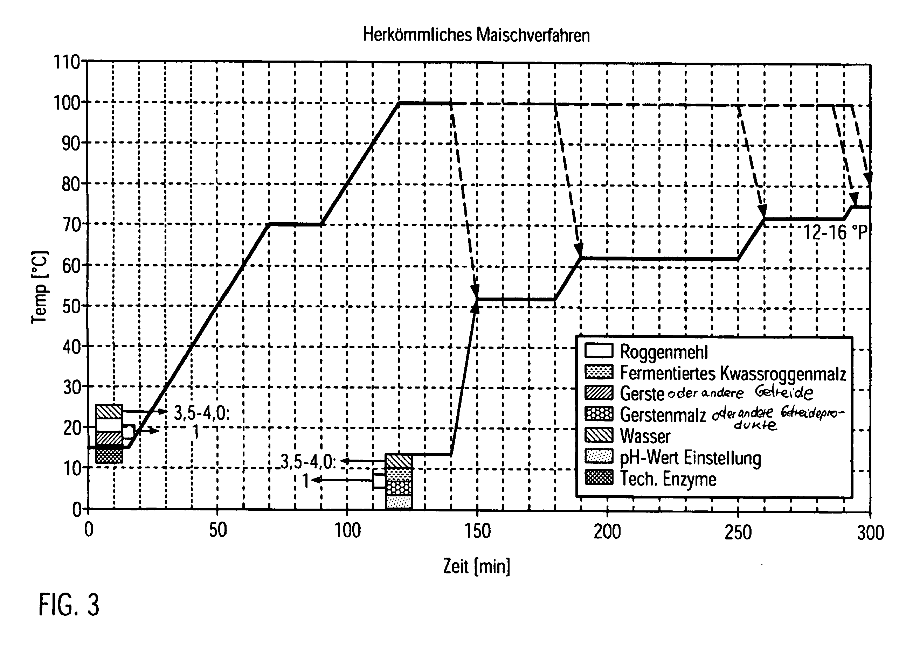

Bislang nehmen die Kwass-Würzehersteller sehr langwierige und energieaufwändige Produktionsverfahren in Kauf, wobei die Maischzeiten bis zu 5 Stunden betragen. Ein aus dem Stand der Technik bekanntes Maischverfahren ist in Figur 3 gezeigt. Dabei werden zwei Teilmaischen parallel zueinander oder nacheinander erzeugt. In einer ersten, meist größeren (Rohfrucht)Teilmaische, wird unvermälztes Getreide (z.B. Roggen, Gerste, Mais) zusammen mit Wasser bei tiefen Temperaturen eingemaischt. Zudem werden technische Enzyme und/oder kleine Malzanteile (als Enzymspender) dazugegeben. Anschließend wird die Rohfruchtmaische stufenweise (vorzugsweise unter Einhaltung von bestimmten Rasten bei unterschiedlichen Temperaturen), auf Kochtemperatur (ca. 100°C) erhitzt und das Gemisch mehrere Minuten bei dieser Temperatur gehalten.

Meist parallel dazu (zeitlich versetzt) wird die kleinere zweite Malzmaische kalt eingemaischt und ihr pH-Wert auf etwa 5, 0 bis 5,5 eingestellt. Nun werden die zwei Maischen zusammengeführt. Dies geschieht dadurch, dass die kochende Maische (Rohfruchtmaische) zur kälteren Maische (Malzmaische) zugebrüht wird. Da jedoch der Anteil der 100 °C heißen Rohfruchtmaische meistens zu groß ist, kann nicht die gesamte Menge auf einmal zu der zweiten Teilmaische zugefügt werden, da ansonsten die Temperatur der Malzmaische zu stark ansteigen würde und somit wichtige Rasten bei bestimmten Temperaturen übersprungen werden würden. Diese jeweiligen Rasten sind jedoch notwendig, da bestimmte Substanzen durch die Enzyme abgebaut werden müssen und die einzelnen Enzymgruppen nebst pH-Optimas auch Temperaturoptimas haben. Werden also bestimmte Temperaturniveaus übersprungen, können wichtige Enzyme nur noch eingeschränkt funktionieren, oder gar geschädigt werden, so dass eine Umsetzung bestimmter Stoffklassen verhindert oder erschwert wird. Daher wird immer nur ein Teil der heißen Rohfruchtmaische zur Malzmaische zugebrüht (in Figur 3 gestrichelt dargestellt), um so die schrittweisen Temperaturerhöhungen beizuführen. Die fertige Maische hat nun eine Konzentration von z. B. 12 bis 16° Plato.

Da die Rohfruchtmaische nur schrittweise der kälteren Malzmaische zugeführt werden kann, werden über einen langen Zeitraum zwei Maischvorrichtungen, d.h. z.B. zwei Maischbottiche blockiert, so dass keine hohe Sudfolge mit nur zwei Gefäßen möglich ist. In der Getränkeproduktion sind jedoch 10 bis 14 Sude pro Tag wünschenswert. Eine hohe Sudfolge ist somit nur durch einen hohen anlagetechnischen Aufwand (z.B. Maische- oder Pufferbehälter) zu realisieren. Darüber hinaus ist der Energieaufwand bei dem bekannten Maischprozess groß. Des Weiteren kann bei dieser Verfahrensweise die Prozessabwärme nicht optimal genutzt werden.

Hiervon ausgehend liegt der vorliegenden Erfindung die Aufgabe zugrunde, ein energiesparendes verbessertes Maischverfahren zur Herstellung von Kwass-Würze bereitzustellen, welche dann zu Kwasswürzekonzentrat oder direkt zu Kwass weiter verarbeitet werden kann.

Erfindungsgemäß wird diese Aufgabe durch ein Kwass-Maischverfahren gemäß Anspruch 1 gelöst.

Dadurch, dass gemäß der vorliegenden Erfindung beim Maischen die erste Teilmaische nun nicht mehr auf Kochtemperatur (ca. 100°C) aufgeheizt wird, kann hier der Energieaufwand reduziert werden. Darüber hinaus ergibt sich hier der Vorteil, dass die heiße erste Teilmaische der zweiten kälteren Teilmaische nicht schrittweise zugefügt werden muss, sondern dass die beiden Teilmaischen auch auf einmal miteinander vermischt werden können, da die Mischtemperatur dann nicht zu stark ansteigt, d.h. vorzugsweise nicht über 60 °C bis 65 °C. Dies bedeutet in der Praxis, dass dann das entleerte Maischgefäß wieder schneller für den nächsten Sud zur Verfügung steht. So kann durch dieses Verfahren die Sudzahl pro Tag deutlich erhöht werden oder auf weitere (Maisch)Gefäße verzichtet werden. Das Erhitzen der Teilmaische (in Schritt a) kann in einer ersten Maischvorrichtung erfolgen und das Einmaischen (in Schritt b) der zweiten Teilmaische in einer zweiten Maischvorrichtung, wobei die Teilmaischen dann entweder in der ersten oder zweiten Maischvorrichtung vermischt werden können.

Es ist jedoch auch möglich, dass die zweite Teilmaische auch in der ersten Maischeinrichtung eingemaischt wird, was ebenfalls ein Maischgefäß spart.

Es ist auch möglich, dass man in die heiße erste (Roggen)Teilmaische zunächst kaltes Wasser gibt und dann das Malz einmaischt.

Das Einmaischen kann direkt in der Maischvorrichtung, d.h. dem Maischbottich erfolgen oder aber auch mit Hilfe eines Vormaischers.

Die Temperatur, auf die die erste Teilmaische in Schritt a aufgeheizt wird liegt erfindungsgemäß in einem Bereich von 75 °C bis 90 °C, vorteilhafter jedoch in einem Bereich von 80 °C bis 85 °C Die Temperatur sollte jedoch vorzugsweise so heiß gewählt werden, dass die Verkleisterungstemperatur aller Rohstoffe, insbesondere der Roggenprodukte erreicht und leicht überschritten wird. Die Temperatur der ersten Teilmaische von 75 °C bis 90°C vorzugsweise 80°C bis 85°C reicht dann aus, um eine Verzuckerung der Roggenstärke zu gewährleisten und die Aktivität der thermisch stabilen Amylasepräparate zu erhalten. Der Erhalt der Amylaseaktivität spart zudem Kosten für zusätzliche Enzympräparate im weiteren Produktionsprozess.

Vorteilhafterweise wird beim Erwärmen der ersten Teilmaische eine Rast oder mehrere kürzere Rasten in einem Temperaturbereich von 56 °C bis 70 °C eingehalten. So können die kristallinen Stärkemoleküle effektiver aufgebrochen, d.h. verkleistert werden (dies geschieht beim Roggen je nach Sorte und Jahrgang bei Temperaturen zwischen 56 °C und 70 °C). Weil häufig keine sortenreinen Chargen erhältlich sind und die exakte Bestimmung der jeweiligen Verkleisterungstemperatur mit nicht unerheblichen Kosten verbunden ist, kann erfindungsgemäß durch Rasten in diesem Bereich ein effizienter und rohstoffspezifischer Maischprozess realisiert werden.

Die Einmaischtemperatur der ersten Teilmaische liegt bei 30°C bis 65°C, vorzugsweise bei 35 °C bis 55 °C. Dies hat mehrere Vorteile. Zum einen wird eine Klumpenbildung der meist fein ausgemahlenen Getreide verhindert, zum anderen kann eine effektivere Wärmerückgewinnung betrieben werden. So kann das warme Wasser, welches z.B. bei der Kochung im Pfannendunstkondensator hergestellt wird und/oder welches bei der Würze bzw. Konzentratkühlung anfällt in effektiver Weise verwendet werden. Außerdem ist eine sinnvolle Verwendung des warmen Glattwassers (extrakthaltiges Auswaschwasser) welches bei der Filtration anfällt, mög-Die Einmaischtemperatur der ersten Teilmaische liegt bei 30°C bis 65°C, vorzugsweise bei 35 °C bis 55 °C. Dies hat mehrere Vorteile. Zum einen wird eine Klumpenbildung der meist fein ausgemahlenen Getreide verhindert, zum anderen kann eine effektivere Wärmerückgewinnung betrieben werden. So kann das warme Wasser, welches z.B. bei der Kochung im Pfannendunstkondensator hergestellt wird und/oder welches bei der Würze bzw. Konzentratkühlung anfällt in effektiver Weise verwendet werden. Außerdem ist eine sinnvolle Verwendung des warmen Glattwassers (extrakthaltiges Auswaschwasser) welches bei der Filtration anfällt, möglich. Der erfindungsgemäße Einmaischtemperaturbereich ermöglicht daher eine wirtschaftlich effektive Wärmerückgewinnung und einen geringeren Energieverbrauch.

Vorteilhafterweise ist die erste Teilmaische eine Roggenteilmaische, die Wasser, technische Enzyme und Mittel zur pH-Werteinstellung umfasst, und als Rohstoff Roggen bzw. Roggenerzeugnisse, insbesondere Roggenmehl und sog. "fermentiertes" Kwass-Roggenmalz enthält.

Weil die erste Teilmaische, als Rohstoff vorwiegend den gesamten Roggenanteil der Gesamtmaische (Anteil des Roggens in der ersten Teilmaische beträgt vorteilhafterweise 90 - 100 % des Gesamtroggenanteils der Gesamtmaische) umfasst, kann bei der Temperaturführung und der pH-Wert-Einstellung speziell auf die Roggenerzeugnisse eing egangen werden. Demnach weist die erste Teilmaische als Rohstoff vorteilhafterweise ausschließlich Roggen bzw. Roggenerzeugnisse auf, wobei ein kleiner Teil Malz als "Enzymspender" zugegeben werden kannn.

Die zweite Teilmaische umfasst Wasser, vorteilhafterweise technische Enzyme, Mittel zur pH-Werteinstellung sowie Gerste und Gerstenmalz. Denkbar sind jedoch alternativ oder zusätzlich auch Zusätze aus Weizen, Mais, Buchweizen, Reis (wobei dieser zuvor gekocht werden sollte) und/oder Kartoffeln bzw. anderen Getreide und/oder deren Erzeugnissen.

Die erste Teilmaische wird mit einem hohen Rohstoffanteil hergestellt, wobei das Einmaischverhältnis (Schüttungshauptgussverhältnis) Rohstoffmenge (kg) / Wassermenge (I) in einem Bereich von 1:2 bis 1:3,4, insbesondere 1:2,5 bis 1:3 liegt. Eine derartige dicke Teilmaische bringt eine höhere Vorderwürzekonzentration, insbesondere in einem Bereich von 18 bis über 28° Plato mit sich. Da die Würze in vielen Betrieben für die Vergärung verdünnt oder zuvor eingedampft wird, ist eine höhere Extraktkonzentration anzustreben. Dadurch können bei gleicher Leistung die entsprechenden Sudgefäße und Armaturen kleiner ausgelegt werden, was zu einer Einsparung der Investitionskosten führt. Außerdem können die Energiekosten für das Erhitzen der Maische reduziert werden. Falls die Würze eingedampft wird, erhöht eine höhere Ausgangskonzentration die Effizienz der Eindampfanlage, da weniger Wasser ausgetrieben werden muss. Dementsprechend ist das zuvor genannte Einmaischverhältnis optimal zur Erzeugung einer hohen Vorderwürzekonzentration und sowohl Investitions- wie auch Betriebskosten können dadurch reduziert werden.

Weil die erste Roggenteimaische vorteilhaftsweise aus 40-80% besteht, enthält die zweite Teilmaische (Restmaische) vorteilhaftsweise 20-60% der gesamt eingesetzten Rohstoffe.

Auch die zweite Teilmaische wird aus den oben erwähnten Gründen dick, mit einem Gussverhältnis von 1:2 bis 1:3,4, insbesondere 1:2,5 bis 1:3 hergestellt.

Um die Temperatur der ersten Roggenteilmaische zu verringern liegen die Einmaischtemperatur der zweiten Teilmaische je nach Einmaischverfahren vorteilhaftsweise bei 5 °C bis 25°C, vorzugsweise bei 10 C bis 15 °C. Weil jedoch die Gefahr besteht, dass es bei derartig tiefen Temperaturen zu einer Klumpenbildung kommt, kann auch erst das kalte Wasser, welches für die zweite Teilmaische verwendet wird, mit der ersten Roggenteilmaische zusammengeführt werden, so dass sich eine entsprechend kühlere Mischtemperatur von 35°C bis 65°C einstellt. Anschließend können die restlichen (kühlen) Rohstoffe in die jetzt verdünnte, kühlere Roggenmaische klumpenfrei eingemaischt werden.

Durch diesen Prozess sollte ein Gussverhältnis der Gesamtmaische von 1:2 bis 1:3,4, insbesondere 1:2,5 bis 1:3 resultieren. Die Gesamtmaischetemperatur sollte anfangs unterhalb von 65°C liegen.

Vorteilhafterweise wird zumindest in Schritt c, vorzugsweise jedoch während des gesamten Einmaisch- und Maischprozesses die Maische mit Hilfe eines Rüttelsystems mechanisch in Schwingungen versetzt. Das Rütteln wirkt sich günstig auf den enzymatischen Abbau der Stärke aus und verringert eine Gasanhaftung an die Partikel. Durch das Rütteln kann die Maischdauer reduziert werden. Darüber hinaus kann sich die Filtrierbarkeit des fertigen Kwasses verbessern.

Bei einem Verfahren zum Herstellen von Kwass werden zunächst Rohstoffe bereitgestellt, insbesondere geschrotetes Malz und zerkleinerte, bzw. vermahlene Rohstoffe (Getreide). Die mit Wasser vermischten Rohstoffe werden einem Maischprozess unterzogen, Um die noch enthaltenen Partikel der Maische abzutrennen erfolgt eine Separation z.B. mittels Läuterbottich, Maischefilter und/oder Zentrifuge. Nach einer Erhitzung erfolgt die Gärung der Kwass-Würze sowie optional eine Filtration des erzeugten Kwass. Schließlich können noch Zusatzstoffe wie Zucker und/oder Aromen sowie Säuren, Farbstoffe, Stabilisierungs- und Konservierungsmittel zugesetzt werden.

Gemäß einer bevorzugten Ausführungsform kann nach dem Abläutern/Filtrieren/Separieren die Kwass-Würze erhitzt werden, wobei vorteilhafterweise danach der Heißtrub abgeschieden werden sollte.

Die Würze kann auch vor der Gärung eingedampft und somit konzentriert werden. Das hergestellte Konzentrat kann zudem gekocht werden, um so die gewünschten sensorischen Eigenschaften einzustellen. Anstatt dessen können jedoch auch entsprechende Zusatzstoffe wie Aromen und Farbstoffe zugesetzt werden.

Die vorliegende Erfindung wird nachfolgend unter Bezugnahme der folgenden Figuren näher erläutert.
- Fig. 1: zeigt in schematischer Darstellung ein Fließbild einer Kwass-Brauerei zur Durchführung des erfindungsgemäßen Verfahrens,
- Fig. 2: zeigt einen Temperaturverlauf in Abhängigkeit der Zeit gemäß dem erfindungsgemäßen Maischverfahren,
- Fig. 3: zeigt einen Temperaturverlauf in Abhängigkeit der Zeit gemäß einem Maischverfahren nach dem Stand der Technik.

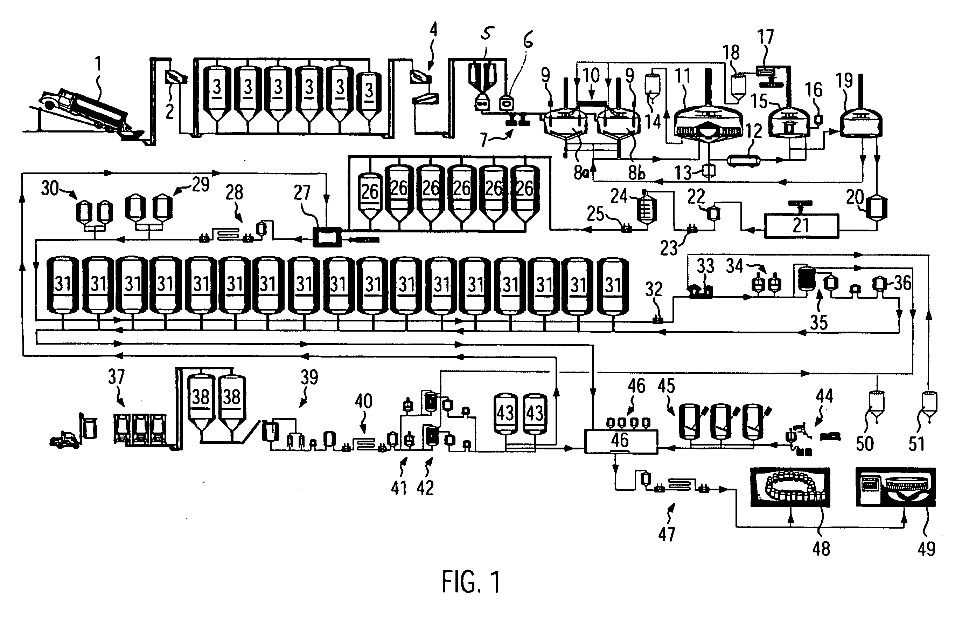

In Zusammenhang mit dem in Fig. 1 gezeigten Fließbild einer Kwass-Brauerei wird das erfindungsgemäße Herstellungsverfahren für Kwass näher erläutert.

Zunächst erfolgt das Bereitstellen von Rohstoffen, insbesondere von geschrotetem Malz und zerkleinerten Getreiden.

Als Rohstoffe kommen Roggen (z.B. in Form von Roggen und/oder Roggenmalz und/oder sog. "fermentierten" Kwass-Roggenmalz und/oder Roggen (Misch)-Brot), Gerste (Gerste und/oder Gerstenmalz und/oder Gersten (Misch)-Brot), Weizen (Weizen und/oder Weizenmalz und/oder Weizen (Misch)-Brot), Mais (Mais und/oder Mais (Misch)-Brot) in Frage. Weitere denkbare Rohstoffe sind Buchweizen und Buchweizenerzeugnisse, Reis und Reiserzeugnisse, Kartoffel und Kartoffelerzeugnisse sowie andere Getreide und/oderZucker- und/oder Stärkehaltige Ingredienzien.

Wie aus dem in Fig. 1 gezeigten Ausführungsbeispiel hervorgeht, werden die angelieferten Rohstoffe z.B. über eine Schüttkuhle 1 entleert und mittels einer Beförderungseinrichtung zu einem Vorreinigungssystem 2 transportiert.. Anschließend gelangt das, von groben Verunreinigungen befreite Gut, in die Silos 3, in denen es eingelagert wird. Bei Bedarf wird das Getreide dann aus den Silos entnommen und über einen Plansichter und Steinausleser 4 nachgereinigt. Von dort aus wird es zu den entsprechenden Schrotsystemen transportiert. Dabei werden Malze über eine Walzenmühle |5|_{[k1]} (nass)geschrotet, wohingegen Rohfrucht mittels einer (Hammer)mühle, insbesondere Hammermühle |6|_{[k2]} zerkleinert wird. Beispielsweise kann dann in einem (Schnecken)transporteur das vorgemaischte Gut mit Kalziumchlorid, Säure oder Lauge und/oder andere ph-einstellende Mittel über eine entsprechende Einrichtung 7 versetzt werden, so dass es einen für den enzymatischen Abbau idealen pH-Wert erreicht.

Der eigentliche Maischprozess findet gemäß einem bevorzugten Ausführungsbeispiel in zwei Maischgefäßen 8a, b statt, die gleichartig ausgebildet sein können und die auch als Maischepfannen verwendet werden können. In bekannter Weise sind die Maischgefäße mit einem Rührwerk und Heizvorrichtungen ausgestattet. In den Maischgefäßen 8a, b werden die Rohstoffe mit Wasser eingemaischt, wie nachfolgend noch näher erläutert wird. Um eine verbesserte, sauerstoffarme Arbeitsweise zu gewährleisten, weisen die Maischgefäße Rüttler 9 auf, die die Maische mechanisch in Schwingung versetzen. Dabei bewegen sich die Rüttler (beispielsweise mindestens ein Rüttelstab) mechanisch in der Maische hin und her (z.B. mit einer variierenden Frequenz). Der Maische können entsprechende Enzyme und Mittel zur pH-Werteinstellung beigefügt werden. Die Enzymgabe erfolgt hier manuell über das Mannloch 10.

Nach Beendigung des Maischprozesses, d.h. bei Erreichen der Jodnormalität wird die Maische geläutert/filtriert und dabei beispielsweise in den Läuterbottich 11 gepumpt. Das Läutern kann jedoch auch mittels Maischefilter, Zentrifuge oder einer anderen Vorrichtung zur Separation erfolgen. Die geklärte Würze wird in einem Vorlaufbehälter 12 aufgefangen. Nachdem eine ausreichende Auslaugung der Treber erfolgt ist, wird das Glattwasser im Glattwasserbehälter 13 aufgefangen und die Treber in den Treberbunker 14 transportiert. Gemäß einer bevorzugten Ausführungsform kann die Würze einer Kochvorrichtung 15 zum Würzekochen geleitet werden. Dieser ist mit einem (Hopfen)dosiergefäß 16 ausgestaltet, so dass Früchte oder andere Zusatzstoffe an dieser Prozessstelle zugefügt werden können. Die bei der Kochung entstehenden Brüden werden im Gegenstrom mittels Kaltwasser, z.B. über einen Pfannendunstkondensator 17 abgekühlt. Das so entstandene Warmwasser wird in einem Warmwassertank 18 aufgefangen und kann z.B. zum Einmaischen des nächsten Sudes verwendet werden. Sobald die Kochung, beendet ist wird die Würze vom Heißtrub befreit, beispielsweise mittels Whirlpool und/oder einer anderen Vorrichtung 19. Von dort aus wird die Würze in einen Pufferbehälter 20 gepumpt, so dass ein kontinuierlicher Zufluss in eine Eindampfanlage 21 gewährleistet werden kann. Weil die evt. anschließende Konzentratkochung nicht kontinuierlich abläuft, wird das Konzentrat in einen Sammelbehälter 22 aufgefangen. Danach wird es erhitzt, insbesondere mittels Platten- oder Rohrbündelwärmetauscher 23 und in einen Konzentratkocher 24 eingeleitet. Dort erfolgt eine Überdruckkochung unter kontinuierlichem Rühren. Nach Beendigung der Kochung wird das heiße Konzentrat erneut über einen Wärmetauscher insbesondere Platten- oder Rohrbündel wärmetauscher 25 abgekühlt und in die Konzentratlagertanks 26 gepumpt. Bei Bedarf kann es von dort aus entweder zum Verkauf abgefüllt oder wie dargestellt innerbetrieblich weiterverarbeitet werden.

Gemäß einer weiteren Ausführungsform wird das Kochen der Kwass-Würze mit den Einrichtungen 15 bis 18 und die Heißtrubabscheidung nicht durchgeführt. Nach dem Läutern kann die Würze in einen Puffertank geleitet und danach erhitzt und dann wahlweise eingedampft werden (oder erst erhitzt, dann gepuffert und dann eingedampft), um das Konzentrat zu gewinnen.

Es ist auch möglich, Kwass direkt, ohne Eindampfung der Kwass-Würze herzustellen. Dann kann man die Komponenten 20 bis 28 einsparen.

Bei Herstellung eines Kwasses aus Kwass-Würzekonzentrat, wird dieses in einer Ausmischvorrichtung 27 mit Wasser verdünnt und mit der entsprechenden Menge an Zuckersirup versetzt. Wurde vorab kein Konzentrat hergestellt, so kann die Würze entweder unvermischt verwendet oder ebenfalls mit Wasser verdünnt werden, um einen entsprechenden Würzegehalt zu erhalten.

Um Fremdkontaminationen bei der Gärung zu vermeiden, kann das Würzezuckersirupgemisch mit Hilfe Erhitzungseinrichtung 28 pasteurisiert bzw. kurzzeiterhitzt werden. Anschließend können Milchsäurebakterien aus dem Assimilator 29 und Hefen aus dem Assimilator 30 in den Würzestrom eindosiert werden.

Kwass sollte immer ein fermentiertes Produkt sein. Dabei ist es den Herstellern überlassen, ob Sie:
● Eine Mischfermentation anwenden, bei der sich die Organismen zusammen im Tank befinden, oder ob Sie
● Die Hefe und Milchsäure in separaten Behältnissen fermentieren lassen und danach die beiden entstandenen Produkte miteinander verschneiden (Dabei können sogar jeweils einzelne Organismenstämme separat behandelt werden). Oder ob Sie:
● Entweder nur eine Fermentation mit Hefen durchführen und anschließend technische Milchsäure geben, oder eine milchsaure Fermentation erfolgt und die Aromen aus der Hefevergärung optionell zugefügt werden.

Die Gärung erfolgt in Fermentationstanks 31, hier als kombinierte Gär- und Drucktanks dargestellt. Nach der Fermentation wird das meist noch warme Produkt (die Gärung erfolgt meist bei Temperaturen von 15-42 °C, vorzugsweise bei 30-40 °C) vorzugsweise zunächst in einem Wärmetauscher 32 (vorzugsweise Platten/oder Rohrbübdelwärmetauscher) abgekühlt. Anschließend kann das kühlere Kwass filtriert werden. Dabei wird bevorzugt zunächst ein Großteil der Mikroorganismen sowie enthaltene Partikel mit einer Zentrifuge 33, abgeschieden. Anschließend erfolgt eine Filtration, vorteilhafterweise eine Anschwemmfiltration. Dabei wird in den Produkt Strom durch eine Zufuhr 34 angerührte Kieselgurmischung eindosiert und das Produkt mit Hilfe des Anschwemmfilters, z.B. Anschwemmkerzenfilter 35 filtriert. Anschließend kann optionell eine Entkeimungsfiltration erfolgen.

Das Kwass wird dann über einen Sammelbehälter 36 Drucktanks (in diesem Fall Gär- und Drucktanks) geleitet. Um die Ratio (Zucker-Säure-Verhältnis) im Fertiggetränk einzustellen, wird oftmals zusätzlicher Zucker benötigt. Dieser sollte Idealerweise in Sirupform vorliegen, oder als solcher hergestellt werden. Dies geschieht beispielsweise, indem der angelieferte Kristallzucker in eine automatische Entleerstation 37 eingebracht wird. Von dort aus kann der Transport in die Zuckersilos 38 erfolgen, so dass für den Lösungsprozess immer ein ausreichender Zustrom erfolgen kann. Nachdem der Zucker kontinuierlich in der Einrichtung 39 gelöst wurde, wird der Sirup mit Hilfe des Pasteurs/Kurzzeiterhitzer 40 pasteurisiert/kurzzeiterhitzt. Über die Einrichtung 41 kann bei bedarf Aktivkohle zugegeben werden und eine Filtration über 42 erfolgen Danach wird der Zuckersirup in die entsprechenden Tanks 43 eingelagert. Andere Zusatzstoffe können pulverförmig angeliefert werden und müssen dann vor dem Einbringen in den Prozess in den entsprechenden Lösebehältern 44 zu Konzentraten ausgemischt/gelöst werden. Dieses wird dann in Konzentratlagertanks 45 eingelagert. Ebenso wird mit Sirupen verfahren, die in Fässern angeliefert werden. In einem Mischer 46 erfolgt dann die Ausmischung des Kwasses. Dabei kann die fermentierte Kwasswürze (jetzt: Kwass) beispielsweise mit den folgenden Zusätzen versetzt werden: Zucker(sirup), Säuren, Kwasswürze, Farbmittel, Stabilisatoren, Aromen, Konzentraten, Säfte, Nektare und/oder Konservierungsmitteln.

Das Fertigprodukt wird mit Hilfe eines Erhitzers 47 kurzzeiterhitzt und zu den Füllern 48, 49 geleitet in denen es in die verschiedensten Gebinden abgefüllt werden kann.

Zur Entsorgung wird die gebrauchte Kieselgur in den Tank 50 geleitet und die Organismen in den Autolysetank 51 transferiert.

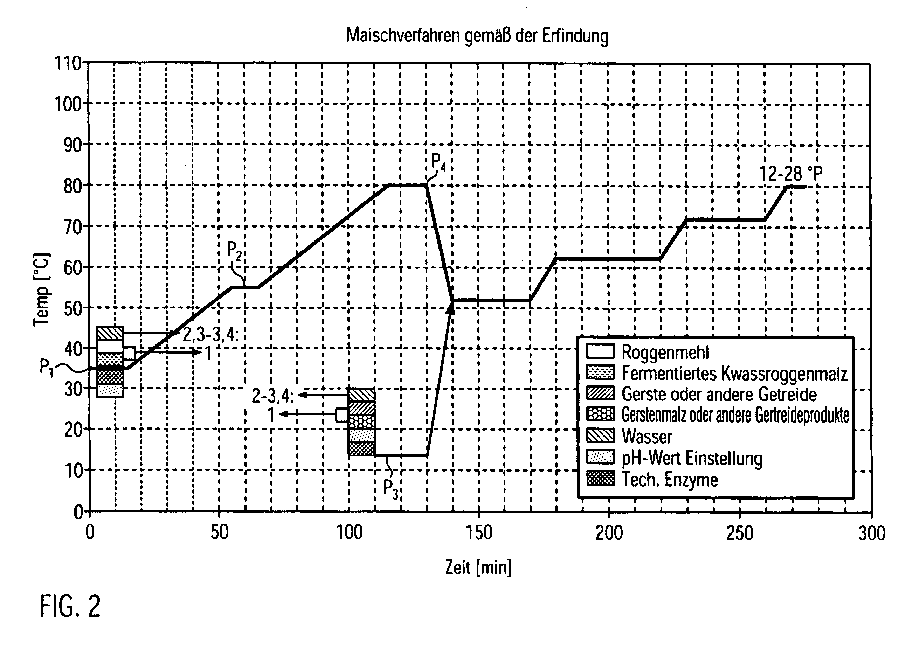

Im Nachfolgenden wird das erfindungsgemäße Kwass-Maischverfahren im Zusammenhang mit Fig. 2 beispielhaft näher erläutert. Zunächst kann eine erste Teilmaische, insbesondere Roggenteilmaische in der Einmaischstrecke 7 oder in einem Maischbottich (z.B. 8a) eingemaischt werden. Hier umfasst die Roggenteilmaische beispielsweise Roggenmehl, sog. "fermentiertes" Kwass-Roggenmalz sowie Wasser.

Im Vergleich zum Stand der Technik wird hier warm eingemaischt und zwar in einem Bereich von 30 bis 65 °C, idealerweise 35 bis 55 °C. Dabei wird das zuvor kalte Brauwasser durch Abwärme aus dem Prozess aufgewärmt (P1)

Weil fermentiertes bzw. geröstetes Roggenmalz sehr sauer ist, muss der pH-Wert beim Einmaischen auf z.B. 5,6 bis 6,5 (gegebenenfalls durch Laugegabe) eingestellt werden, so dass die Enzyme optimal wirken können. Die Zugabe von zytolytischen-, proteolytischen- und amylytischen- und pentosanabbauenden Enzymen sowie die Gabe von thermisch stabilen Amylasen ist für die Roggenteilmaische sinnvoll und sollte je nach Rezeptur entsprechend angepasst werden. Es können jedoch auch andere Enzyme eingesetzt werden.

Vorteilhafterweise ist das Einmaischverhältnis (Gussverhältnis) von Rohstoffmenge (kg) /Wassermenge (I) in einem Bereich von 1:2 bis 1:3,4, insbesondere 1:2,5 bis 1:3. Die dickere Maische ermöglicht einen ökonomischeren Maischprozess, da Kwass-Würzen mit einer höheren Vorderwürzekonzentration von 18 bis über 28° Plato erzeugt werden können und dadurch der apparative Aufwand bei gleicher Leistung, sowie die laufende Kosten (z.B. für die Maischeerhitzung und den Pumpenbetrieb) sowie die Folgekosten (z.B. Für das Eindampfen der Würze) reduziert werden können. Da die Würze in vielen Betrieben für die Vergärung verdünnt oder zuvor gar eingedampft wird ist diese hohe Extraktkonzentration anzustreben. Dadurch können bei gleicher Leistung die entsprechenden Sudgefäße und Armaturen kleiner ausgelegt werden, was zu einer Einsparung von Investitionskosten führt. Außerdem können Energiekosten für das Erhitzen der Maische gespart werden. Falls die Würze eingedampft wird, erhöht eine höhere Ausgangskonzentration die Effizienz der Eindampfanlage, da weniger Wasser ausgetrieben werden muss. Weil jedoch eine dickere Maische die enzymatischen Reaktionen erschwert und dementsprechend mehr technische Enzyme zugegeben werden müssen, gilt es den Schnittpunkt zwischen sinnvollem Einmaischverhältnis und zusätzlichen Mehrkosten für Enzympräparate individuell und rezeptabhängig zu ermitteln.

Nach dem Einmaischen müssen die kristallinen Stärkemoleküle aufgebrochen, d.h. verkleistert werden. Dies geschieht beim Roggen jeweils sorten- und jahrgangsabhängig bei Temperaturen zwischen 56 bis 70 °C. Weil häufig keine sortenreinen Chargen erhältlich sind, und die exakte Bestimmung der jeweiligen Verkleisterungstemperatur mit nicht unerheblichen Kosten verbunden ist, ist es sinnvoll ein allgemein anwendbares Maischschema zu verwenden. Dementsprechend wird in dem dargestellten Beispiel eine Rast, (möglich wären auch mehrere kürzere Rasten innerhalb der Temperaturspanne) zwischen 56 und 70 °C eingehalten (P2). Die Gesamtdauer der Rast beträgt etwa 10 bis 40 Minuten, vorzugsweise jedoch 10 Minuten. Bei den in Fig. 2 gezeigten Ausführungsbeispiel wird die Rast bei ca. 54°C für 10 Minuten eingehalten. Die geringe Temperatur soll bewirken, dass Proteine und ähnliches abgebaut werden, so dass die Stärkemoleküle bei der Verzuckerungsrast zugänglich sind. Die Aufheizrate liegt z.B. etwa in einem Bereich von 0,5°C/min bis 2,5°C pro Minute. Das Kochen der Roggenteilmaische (bei ca. 100°C), d.h. der ersten Maische ist nicht notwendig. Eine maximale Aufwärmtemperatur, bzw. Teilmaischetemperatur von 75 °C bis 90 °C, insbesondere 75 °C bis 85 °C reicht aus, um die Roggenstärke zu verzuckern und die Aktivität der thermisch stabilen Amylasepräparate zu erhalten. Der Erhalt der Amylaseaktivität spart zudem Kosten für weitere Enzympräparate im weiteren Produktionsprozess. Die erste Teilmaische wird dann etwa 5 bis 40 Minuten, insbesonders 10 Minuten, auf der erhöhten Teilmaischtemperatur von 80 °C bis 90 °C bzw. 80 °C bis 85 °C gehalten. Daher wurde in dem in Fig. 2 illustrierten Beispiel eine 10 minütige Rast bei 80 °C dargestellt.

Weil das industriell hergestellte Kwass ein Roggenbrotaroma aufweisen soll (und aufgrund der Verfügbarkeit und des Preises) beträgt der Roggen(mehl)anteil vorzugsweise 30 bis 80 % der gesamt eingesetzten Rohstoffe. Das sog. "fermentierte" Kwassroggenmalz ist zusätzlich ausschlaggebend für das Aroma und die Farbgebung verantwortlich. Daher beträgt der Anteil an fermentiertem Kwassroggenmalz vorteilhaftsweise 10 bis 50 % der gesamt eingesetzten Rohstoffe. Damit ergibt sich für die erste Roggenteilmaische vorteilhaftsweise ein Gesamtrohstoffanteil von 40 bis 80 %.

Um die restlichen Rohstoffe wie z.B. Gerstenmalz und Gerste (aber auch die anderen oben erwähnten Rohstoffe) ebenfalls zu verzuckern, werden diese ebenfalls einem Maischprozess unterzogen. (P3).

Auch die zweite Teilmaische wird aus den oben erwähnten Gründen dick, mit einem Gussverhältnis von 1:2 bis 1:3,4, insbesondere 1:2,5 bis 1:3 hergestellt.

Um die Temperatur der ersten Roggenteilmaische zu verringern liegen die Einmaischtemperatur der zweiten Teilmaische je nach Einmaischverfahren vorteilhaftsweise bei 5 °C bis 25°C, vorzugsweise bei 10 C bis 15 °C. Weil jedoch die Gefahr besteht, dass es bei derartig tiefen Temperaturen zu einer Klumpenbildung kommt, kann auch erst das kalte Wasser, welches für die zweite Teilmaische verwendet wird, mit der ersten Roggenteilmaische zusammengeführt werden, so dass sich eine entsprechend kühlere Mischtemperatur von 35°C bis 65°C einstellt. Anschließend können die restlichen (kühlen) Rohstoffe in die jetzt verdünnte, kühlere Roggenmaische klumpenfrei eingemaischt werden.

Durch diesen Prozess sollte ein Gussverhältnis der Gesamtmaische von 1:2 bis 1:3,4, insbesondere 1:2,5 bis 1:3 resultieren. Die Gesamtmaischetemperatur sollte anfangs unterhalb von 65°C liegen.

Die Temperatur der Gesamtmaische wird dann stufenweise erhöht, bis die Gesamtmaische jodnormal ist.

Weil die Roggenteilmaische nicht gekocht wird (und dementsprechend kälter ist als die traditionell hergestellte Rohfruchtkochmaische) kann die gesamte Menge der kalten Malzmaische zugeführt werden, ohne dass ein zu starker Temperaturanstieg (über 60 bis 65 °C) erfolgt (P4). Dabei bietet die beispielhaft dargestellte Anlage verschiedene Möglichkeiten dies zu tun. Einige davon sind:
● Eine Möglichkeit wäre die Rohstoffe in der Einmaischstrecke 7 mit kaltem Wasser zu versetzen (Vorzugsweise auch in einem Gussverhältnis von 1:2,5 bis 1:3) Anschließend könnte das Gemisch (zweite Teilmaische) zu der ersten Roggen-Teilmaische (z.B. in Behälter 8a) zugeführt werden, so dass sich die Gesamtmaische entsprechend abkühlt (im Bsp. Auf 54 °C).
● Alternativ dazu könnte auch zunächst nur das kalte Wasser der zweiten Teilmaische zu der ersten Roggenteilmaische (z.B. In 8a) gegeben werden, so dass sich eine entsprechende Abkühlung und Verdünnung der Roggenteilmaische vollzieht. Anschließend könnten die restlichen Rohstoffe in die verdünnte, kühlere Roggenmaische eingebracht werden.
● Eine andere Möglichkeit bietet sich wenn im anderen Maischbottich (z.B. 8b) die zweite Teilmaische zeitlich versetzt kalt angestellt wird. Dann kann entweder der Inhalt des Behälters 8a in 8b gegeben werden oder umgekehrt.

Dies bedeutet in der Praxis, dass vorzugsweise immer ein Maischgefäß entleert wird und für einen weiteren Sud zur Verfügung steht, so dass durch dieses Verfahren die Sudzahl pro Tag deutlich erhöht werden-, und/oder auf ein weiteres Maischgefäß verzichtet werden kann.

Um die gewünschten Eigenschaften der Gesamtmaische zu erhalten (vorzugsweise: Ein Gussverhältnis von 1:2,5 bis 1:3, Einen pH-Wert um 5,5 bis 6,5, Eine Temperatur von unter 65°C und eine benötigte Enzymausstattung der Gesamtmaische) können weitere Ingredienzien zugegeben werden die diese Eigenschaften bewirken (z.B. Lauge, Säure, Enzyme, Rohstoffe).

Die Mischtemperatur der beiden Maischen beträgt hier in etwa 53 °C. Dementsprechend kann die Temperatur der ersten bzw. zweiten Teilmaische erhöht oder veringert werden, wenn die Mengen vorher angepasst werden.

Die Gesamtmaische wird weiter erhitzt,' wobei es insbesondere eine Eiweißrast, bei einer Temperatur von 45 °C bis 60 °C über eine Dauer von 5 bis 50 Minuten, eine Maltoserast bei 60 °C bis 70 °C über eine Dauer von 5 bis 50 Minuten und einer Verzuckerungsrast in einem Temperaturbereich von 70 °C bis 80 °C über eine Dauer von 5 bis 50 Minuten eingehalten wird. Es ergibt sich idealerweise eine Vorderwürzekonzentration von über 18 bis 28° Plato.

Während des gesamten Einmaisch- und Maischprozesses wird auf eine sauerstoff/luftarme Arbeitsweise geachtet. Das Rüttelsystem wird vorzugsweise im gesamten Einmaisch- und Maischprozess verwendet. Das Maischverfahren wird bis zur vollständigen Verzuckerung, d.h. bis Jodnormal durchgeführt.

Die erzeugte Würze wird dann zur Partikelentfernung (hier im Läuterbottich) weitergeleitet.

Das erfindungsgemäße Maischverfahren spart Energie, verringert die Investitionskosten und Betriebskosten der Anlage und ist für viele unterschiedliche Rezepte und Roggensorten geeignet und steigert die Rohstoffausbeute.

Bei der Herstellung von Kwass können neben den Roh- und Grundstoffen auch noch Zusatzstoffe eingesetzt werden.

Als Zusatzstoffe werden diverse süßende oder säuernde Ingredienzien sowie geschmacksgebende Zutaten wie Obst und Gemüsesorten sowie würzende Ingredienzien zugesetzt. Beispielhaft dafür sind: Zucker und Zuckererzeugnisse (Karamellzucker, Zuckerkulör, Melasse etc.), Süßstoffe (künstlich wie Aspartam oder natürlich wie Honig), Säuren, künstliche oder natürliche Zitronen- oder Milchsäuren etc.), Obst und Obsterzeugnisse (Kern-, Stein-, Beerenobst), Nüsse und Nusserzeugnisse (Erdbeeren), würzende Stoffe: Minze, Hopfen, Zwiebeln, Knoblauch, Kümmel, Salz, Pfeffer, Chili etc., natürliche und/oder künstliche Aromen wie Vanillin, aber auch Raucharoma, Brotaroma, brenzliges Aroma. Die Aromen können zu verschiedenen Prozessschritten wie beispielsweise vor der Gärung oder nach der Gärung/Filtration zugegeben werden.

### Beispiel zur Herstellung von Kwass

Bei dem hergestellten Kwass, werden als Rohstoffe Roggenmehl, Gerste, Gerstenmalz und fermentiertes Kwass-Roggenmalz zur Kwass-Würzekonzentratherstellung verwendet. Dabei wurde folgende Rezeptur gewählt: 20 % fermentiertes Kwass-Malz, 15 % Gerstenmalz, 25 % Gerste, 40 % Roggenmehl.

Das fermentierte Kwass-Malz und das Gerstenmalz wurden in einer Zweiwalzmühle (0,8 mm Walzenabstand) geschrotet. Die Gerste wurde mittels einer Hammermühle geschrotet und diverse technische Enzympräparate beim Maischen verwendet.

Die Einstellung des Maische-pH-Wertes erfolgte durch die Dosage von technischer Milchsäure und NaOH. Das Gussverhältnis betrug 1:3

Das Einmaischen erfolgt in einem Shakesbeer-Maischebottich mit Shakesbeer Rüttlersystem der Firma Krones/Steinecker. Beim Einbringen der beschriebenen Rohstoffe wurde versucht, möglichst wenig Sauerstoff in das System einzudringen. Zunächst wurde das kalte Brauwasser auf 32 °C aufgewärmt und das Kwass-Malz mit dem Roggenmehl entsprechend eingemaischt (Gussverhältnis 1:2,8). Nach dem Einmaischen wurde der pH-Wert auf etwa 5,6 eingestellt, Thermamyl und Promozyme zugegeben und die Maische für etwa 15 Minuten mit eingeschaltetem Rüttler auf dieser Temperatur gehalten. Anschließend wurde die Roggenteilmaische auf 55 °C erhitzt: Heizrate: 0,5 °C pro Minute und eine etwa 10 Minuten lange Rast eingelegt. Danach wurde die Roggenteilmaische auf 83 °C erhitzt und etwa 15 Minuten lang auf dieser Temperatur gehalten. Dabei stellte sich bereits eine Jodnormalität der Teilmaische ein. Die zweite kalte Teilmaische wurde nicht in einem extra Maischbottich hergestellt, sondern in dem ersten Maischbottich. Nach der Heißhaltephase wurde somit die restliche Wassermenge kalt in die Maische zugegeben, so dass sich eine Mischtemperatur von 56 °C einstellte.

Der Rüttler wurde erneut eingeschaltet und das restliche Gerstenmalz sowie die Gerste (mit Raumtemperatur) zugegeben, so dass die Gesamtmaische eine Temperatur von etwa 54 °C aufwies. Anschließend wurden die restlichen oben beschriebenen Enzyme zugegeben und die Maischtemperatur für 40 Minuten auf 42 °C gehalten. Es folgte eine 40 Minuten lange Rast bei 62 °C und eine 35 Minuten lange Rast bei 42 °C bevor die jodnormale Maische mit 83 °C in den vorgewärmten Maischefilter zum Läutern transferiert wurde.

Der Anteil der ersten Roggenteilmaische zur Gesamtmaische betrug 65%. Die Gussmenge beider Teilmaischen betrug 1:2,8

Die Maischeabtrennung bzw. das Läutern erfolgte in einem Maischefilter. Dabei baute sich ein konstanter Überdruck von 1 bar auf. Das Filtrat lief blank mit einer Vorderwürzekonzentration von 23° Plato ab. Nach dem Anschwänzen hatte die Pfannevollwürze eine Konzentration von 18° Plato.

Die erzeugte Kwass-Würze wurde bei diesem Beispiel gekocht.

Die Würzekochung erfolgte im Kochsystem Typ Stromboli der Firma Krones/Steinecker und dauerte 30 Minuten. Die Kochtemperatur lag bei ca. 98 °C.

Die Klärung der Würze erfolgte im Whirlpool. Dabei wird die Würze tangential in einen zylindrischen Behälter eingeleitet, wobei sich in der Mitte des Bodens des Whirlpools ein Trubkegel ausbildet. Anschließend erfolgt eine Whirlpoolrast. Diese dauerte etwa 10 Minuten.

Bei diesem Beispiel wurde nur ein Maischbehälter verwendet. Selbstverständlich kann das zuvor gezeigte Beispiel auch unter Verwendung von zwei Maischevorrichtungen bzw. Bottichen 8a, b durchgeführt werden.

Die Parameter, die in dem Beispiel gezeigt wurden, sind rein beispielhaft und können je nach Prozess variieren.

Die so gewonnene fertige Würze kann dann entweder erst eingedampft und aufkonzentriert werden, weiterbehandelt, oder gleich zum Gärprozess weitergeleitet werden.

## Patentansprüche

1. Maischverfahren zur Herstellung von Kwass-Würze mit folgenden Schritten:
a) Einmaischen einer ersten Teilmaische, insbesondere Roggenteilmaische und Erhitzen der ersten Teilmaische auf eine Temperatur unterhalb der Kochtemperatur, in einem Bereich von 75° bis 90°C,
b) Einmaischen einer zweiten Teilmaische, und
c) stufenweises Erhitzen der vermischten ersten und zweiten Teilmaische.

2. Maischverfahren nach Anspruch 1, **dadurch gekennzeichnet, dass** in Schritt a) das Erwärmen der Teilmaische in einer ersten Maischvorrichtung (8a) erfolgt und das Einmaischen in Schritt b) der zweiten Teilmaische in einer zweiten Maischvorrichtung (8b) erfolgt und die Teilmaischen entweder in der ersten oder zweiten Maischvorrichtung zusammengemischt werden oder
in Schritt a) das Erwärmen der ersten Teilmaische in einer ersten Maischvorrichtung (8a), erfolgt und die zweite Teilmaische in der ersten Maischeinrichtung (8a) eingemaischt wird.

3. Maischverfahren nach Anspruch 1 oder 2, **dadurch gekennzeichnet, dass** die Temperatur in Schritt a) bei 80 bis 85° liegt.

4. Maischverfahren nach mindestens einem der Ansprüche 1 bis 3, **dadurch gekennzeichnet, dass** beim Erwärmen der ersten Teilmaische eine Rast oder mehrere Rasten in einem Temperaturbereich von 56° - 70 °C eingehalten werden.

5. Maischverfahren nach mindestens einem der Ansprüche 1 bis 4, **dadurch gekennzeichnet, dass** die Einmaischtemperatur der zweiten Teilmaische bei 5 bis 25 Grad liegt und/oder die Einmaischtemperatur der ersten Teilmaische bei 30 bis 65°, vorzugsweise 35 bis 55 °C liegt.

6. Maischverfahren nach mindestens einem der Ansprüche 1 bis 5, **dadurch gekennzeichnet, dass** die erste Teilmaische eine Roggenteilmaische ist, die Wasser und als Rohstoff Roggen, insbesondere Roggenmehl und fermentiertes Kwass-Roggenmalz umfasst.

7. Maischverfahren nach mindestens einem der Ansprüche 1 bis 6, **dadurch gekennzeichnet, dass** die zweite Teilmaische Wasser sowie mindestens einen der folgenden Rohstoffe oder Rohstofferzeugnisse umfasst: Gerste, Weizen, Mais, Buchweizen, Reis sowie Kartoffel.

8. Maischverfahren nach mindestens einem der Ansprüche 1 bis 7, **dadurch gekennzeichnet, dass** die erste Teilmaische eine dicke Maische ist, bei der das Einmaischverhältnis von Rohstoffmenge(kg) / Wassermenge (I) in einem Bereich von 1:2 bis 1:3,4, insbesondere 1:2,5 bis 1:3 liegt.

9. Maischverfahren nach mindestens einem der Ansprüche 1 bis 8, **dadurch gekennzeichnet, dass** die Vorderwürzekonzentration in einem Bereich von 18 bis 28 °P insbesondere bis über 28°P liegt.

10. Maischverfahren nach mindestens einem der Ansprüche 1 bis 9, **dadurch gekennzeichnet, dass** die erste Teilmaische 40 bis 80 % der Gesamtmaische **beträgt.**

11. Maischeverfahren nach mindestens einem der Ansprüche 1 bis 10, **dadurch gekennzeichnet, dass** zumindest in Schritt c) des Maischprozesses die Maische mit Hilfe eines Rüttelsystems mechanisch in Schwingungen versetzt wird.

12. Verfahren zum Herstellen von Kwass mit einem Maischverfahren nach mindestens einem der Ansprüche 1 bis 11, mit folgenden Schritten:
- Bereitstellen von Rohstoffen, insbesondere von geschrotetem Malz und zerkleinerten Rohstoffen,
- Maischen der mit Wasser vermischten Rohstoffe,
- Abläutem/Filtrieren der Kwass-Würze aus der Maische,
- Erwärmen der Kwass-Würze.

13. Verfahren nach Anspruch 12, **dadurch gekennzeichnet, dass** nach einer Gärung der Kwass-Würze optional folgende Schritte folgen:
- Filtration der Kwass-Würze, und/oder
- Zusetzen von Zucker und/oder Aromen.

14. Verfahren nach Anspruch 12 oder 13, **dadurch gekennzeichnet, dass** beim Erwärmen die Würze gekocht und der Heißtrub abgeschieden wird.

15. Verfahren nach einem der Ansprüche 12 bis 14, **dadurch gekennzeichnet, dass** vor der Gärung die Würze eingedampft und konzentriert wird.

16. Verfahren nach Anspruch 15, **dadurch gekennzeichnet, dass** das Konzentrat gekocht wird, wobei der Kochvorgang insbesondere bei Überdruck unter Rühren erfolgt.

## Claims

1. Mashing method for producing kvass wort, comprising the following steps:
a) mashing in a first partial mash, in particular rye partial mash, and heating the first partial mash to a temperature below the boiling temperature, in a range from 75° to 90°C,
b) mashing in a second partial mash, and
c) gradually heating the mixed first and second partial mashes.

2. Mashing method according to claim 1, **characterised in that** in step a) the partial mash is heated in a first mashing device (8a) and the second partial mash is mashed in in step b) in a second mashing device (8b) and the partial mashes are either mixed together in the first or second mixing device or
in step a) the first partial mash is heated in a first mashing device (8a), and the second partial mash is mashed in in the first mashing device (8a).

3. Mashing method according to claim 1 or 2, **characterised in that** the temperature in step a) is at 80 to 85°.

4. Mashing method according to any one of claims 1 to 3, **characterised in that** during heating of the first partial mash a break or a plurality of breaks are observed in a temperature range of 56° to 70°C.

5. Mashing method according to at least one of claims 1 to 4, **characterised in that** the mashing in temperature of the second partial mash lies at 5 to 25 degrees and/or the mashing in temperature of the first partial mash lies at 30 to 65°, preferably 35 to 55°C.

6. Mashing method according to at least one of claims 1 to 5, **characterised in that** the first partial mash is a rye partial mash which includes water and rye as a raw material, in particular rye flour and fermented kvass rye malt.

7. Mashing method according to at least one of claims 1 to 6, **characterised in that** the second partial mash includes water and at least one of the following raw materials or raw material products: barley, wheat, maize, buckwheat, rice or potatoes.

8. Mashing method according to at least one of claims 1 to 7, **characterised in that** the first partial mash is a thick mash in which the mashing ratio of quantity of raw material (kg)/quantity of water (I) lies in a range of 1:2 to 1:3.4, in particular 1:2.5 to 1:3.

9. Mashing method according to at least one of claims 1 to 8, **characterised in that** the predominant wort concentration lies in a range of 18 to 28°P, in particular up to more than 28°P.

10. Mashing method according to at least one of claims 1 to 9, **characterised in that** the first partial mash makes up 40 to 80% of the total mash.

11. Mashing method according to at least one of claims 1 to 10, **characterised in that**, at least in step c) of the mashing process, the mash is mechanically caused to vibrate with the aid of a vibrator system.

12. Method for producing kvass comprising a mashing method according to at least one of claims 1 to 11, comprising the following steps:
- providing raw materials, in particular kibbled malt and size-reduced raw materials,
- mashing the raw materials mixed with water,
- lautering/filtering the kvass wort from the mash,
- heating the kvass wort.

13. Method according to claim 12, **characterised in that** after fermentation of the kvass wort the following steps optionally follow:
- filtration of the kvass wort and/or
- addition of sugar and/or flavours.

14. Method according to claim 12 or 13, **characterised in that** during heating the wort is cooked and the hot trub is separated.

15. Method according to any one of claims 12 to 14, **characterised in that** before fermentation the wort is evaporated and concentrated.

16. Method according to claim 15, **characterised in that** the concentrate is cooked, wherein the cooking process takes place in particular at overpressure and with stirring.

## Revendications

1. Procédé de brassage pour la fabrication de moût de kvas, comprenant les étapes suivantes :
a) empâtage d'une première sous-maische, en particulier d'une sous-maische de seigle, et chauffage de la première sous-maische à une température inférieure à la température de cuisson, dans une plage de 75 °C à 90 °C,
b) empâtage d'une deuxième sous-maische, et
c) chauffage graduel des première et deuxième sous-maisches mélangées.

2. Procédé de brassage selon la revendication 1, **caractérisé en ce qu'**à l'étape a), le chauffage de la sous-maische s'effectue dans un premier dispositif de brassage (8a), l'empâtage à l'étape b) de la deuxième sous-maische s'effectue dans un deuxième dispositif de brassage (8b), et les sous-maisches sont mélangées ensemble soit dans le premier dispositif de brassage, soit dans le deuxième dispositif de brassage, ou
à l'étape a), le chauffage de la première sous-maische s'effectue dans un premier dispositif de brassage (8a), et l'empâtage de la deuxième sous-maische s'effectue dans le premier dispositif de brassage (8a).

3. Procédé de brassage selon la revendication 1 ou 2, **caractérisé en ce que** la température à l'étape a) est comprise entre 80°C et 85°C.

4. Procédé de brassage selon au moins l'une des revendications 1 à 3, **caractérisé par** une ou plusieurs périodes de repos dans une plage de température de 56 °C à 70 °C lors du chauffage de la première sous-maische.

5. Procédé de brassage selon au moins l'une des revendications 1 à 4, **caractérisé en ce que** la température d'empâtage de la deuxième sous-maische est comprise entre 5 °C et 25 °C et/ou **en ce que** la température d'empâtage de la première sous-maische est comprise entre 30 °C et 65 °C, et préférablement entre 35 °C et 55 °C.

6. Procédé de brassage selon au moins l'une des revendications 1 à 5, **caractérisé en ce que** la première sous-maische est une sous-maische de seigle qui contient de l'eau et du seigle comme matière première, en particulier de la farine de seigle et du malt de seigle pour kvas fermenté.

7. Procédé de brassage selon au moins l'une des revendications 1 à 6, **caractérisé en ce que** la deuxième sous-maische contient de l'eau ainsi qu'au moins une des matières premières ou produits de matière première suivants : orge, blé, mais, sarrasin, riz ou pomme de terre.

8. Procédé de brassage selon au moins l'une des revendications 1 à 7, **caractérisé en ce que** la première sous-maische est une maische épaisse, dans lequel le ratio d'empâtage, qui correspond au rapport quantité de matière première (kg) / quantité d'eau (1), est compris dans une plage de 1:2 à 1:3,4 et en particulier de 1:2,5 à 1:3.

9. Procédé de brassage selon au moins l'une des revendications 1 à 8, **caractérisé en ce que** la concentration du premier moût est comprise entre 18 °P et 28 °P, et est en particulier même supérieure à 28 °P.

10. Procédé de brassage selon au moins l'une des revendications 1 à 9, **caractérisé en ce que** la première sous-maische correspond à une fraction de 40 % à 80 % de la maische totale.

11. Procédé de brassage selon au moins l'une des revendications 1 à 10, **caractérisé en ce que**, au moins à l'étape c) du procédé de brassage, la maische est remuée mécaniquement par oscillation à l'aide d'un système vibratoire.

12. Procédé de préparation de kvas avec un procédé de brassage selon au moins l'une des revendications 1 à 11, comprenant les étapes suivantes :
- préparation de matières premières, en particulier de malt broyé et de matières premières hachées,
- brassage des matières premières mélangées avec de l'eau,
- clarification/filtration du moût de kvas à partir de la maische,
- chauffage du moût de kvas.

13. Procédé selon la revendication 12, **caractérisé en ce qu'**une fermentation du moût de kvas est suivie par les étapes optionnelles suivantes :
- filtration du moût de kvas, et/ou
- ajout de sucre et/ou d'arômes.

14. Procédé selon la revendication 12 ou 13, **caractérisé en ce que**, lors du chauffage, le moût est cuit et les drèches sont éliminées.

15. Procédé selon l'une des revendications 12 à 14, **caractérisé en ce que** le moût est traité à la vapeur et concentré avant la fermentation.

16. Procédé selon la revendication 15, **caractérisé en ce que** le concentré est cuit, dans lequel le procédé de cuisson s'effectue en particulier en mélangeant sous surpression.
